Europäisches Patentamt

**European Patent Office**                    (11) Publication number:    **0 086 584**
                                                                          **A1**
**Office européen des brevets**

## EUROPEAN PATENT APPLICATION

(21) Application number: **83300448.4**                (51) Int. Cl.³: **A 23 K 1/20,** A 23 K 1/22

(22) Date of filing: **28.01.83**

(30) Priority: **02.02.82 GB 8202921**

(71) Applicant: **BIP CHEMICALS LIMITED, 20 St. Mary's
Parsonage, Manchester M3 2NL (GB)**

(43) Date of publication of application: **24.08.83
Bulletin 83/34**

(72) Inventor: **Barrett, Robert McDowell, 26 Kidderminster
Road, West Hagley Worcs (GB)**
Inventor: **Ogden, Dennis Henry, 167 Goldthorne Hill,
Penn Wolverhampton Staffs (GB)**

(84) Designated Contracting States: **AT BE CH DE FR GB IT
LI NL**

(74) Representative: **Hadfield, Robert Franklin et al, 20, St.
Mary's Parsonage, Manchester M3 2NL (GB)**

(54) Improvements relating to animal feedstuffs.

(57) In the manufacture of feedstuff blocks containing U.F.
resin as a binder, two components are prepared, one of
which contains the curable UF resin and a base, and the
other an acid catalyst, either or both components being a
slurry containing solid nutrients. The two components are
pumped as two streams, mixed and cast or extruded into the
desired form. The base exotherms with the acid catalyst to
accelerate the cure of the U.F. binder resin.

0086584

— 1 —

<u>Improvements relating to manufacture of animal feedstuffs</u>

The invention relates to the manufacture of animal feedstuffs, and particularly to the manufacture of feedstuff blocks which can be eaten by animals and yet are stable in damp conditions and nutritionally valuable.

UK Patent Application No. 2,013,471A relates to the preparation of feedstuff blocks which utilise a urea-formaldehyde resin as binder and which are cast in a mould. However, we have found that the process for making the blocks which is described in that specification does not facilitate commercial production of blocks since when all the ingredients required to produce a nutritionally balanced block are present, the simple mixing process described in that specification does not produce a satisfactory product.

In a feedstuff block a desirable component is magnesium, which is conveniently added as the oxide, but unfortunately magnesium oxide is a strong base and reacts violently with the acid catalyst required to harden urea-formaldehyde resin binder. In the process described in UK 2,013,471A this is liable to melt the plastic bowl used! due to overheating in patches as a result of rapid reaction occurring before the reactants can be adequately dispersed in the inert diluents. This

0086584

gives rise to uneven hardening, reduce binder
efficiency, renders uniform dispersion impossible and is
liable to make the mixture impourable before it is
mixed, and in any event will produce a block of poor
integrity.

We have now devised a process which copes with these
difficulties.

According to the present invention a process for the
manufacture of feedstuff blocks comprises preparing two
components to be mixed, one of which is acidic, and the
other contains a urea-formaldehyde resin and a base to
exotherm with the acid, either or both components being
a slurry containing solid nutrients and both components
being sufficiently liquid to be pumpable, pumping said
components in two streams, intimately mixing the two
streams and casting or extruding the resultant reacting
mixture into the desired form.

In this process the intimate pre-mixture of resin or
acid with nutrient solids, followed by rapid mixing of
flowing streams of components produces a homogeneous
product but enables the exotherm to be controlled and
utilized to accelerate the cure of the resin binder
without degradation.

As indicated above either or both the components may
contain nutrient solids. The extent of the exotherm can
be controlled by pre-mixing some of the base with the
acidic stream prior to the mixing of the two components
so that this heat is dissipated of reaction so produced
to dissipated before the two components are mixed
together.

0086584

There is no constraint on the type of urea-formaldehyde resin used, and liquid or solid resins can be utilized in the process. The amount of resin used in the blocks will generally be above about 5% to ensure good binding and below about 40% to make sure th blocks are not too hard.

The other components of the blocks may be selected from materials conventionally used for such purposes which may be organic for example, molasses, carbohydrates, bran and oil-cake, and inorganic for example, sodium chloride, calcined magnesite, calcium sulphate, chloride, phosphate, carbonate and other sulphates or phosphates.

If desired the blocks can also include other ingredients to supplement particular items in an animal diet, or by way of medication. Examples of ingredients which it may be convenient to include are vitamins, trace elements (selenium manganese etc) and hormones.

The acid catalyst is preferably phosphoric acid, because of the nutritional value of phosphorus but other acids such as sulphuric acid may be used instead.

In the present process it will be appreciated that the acid/base reaction is used to generate heat to cure the resin rapidly, and sufficient acid must be used to neutralize all the components of the mixture which are basic and leave a calculated excess of acid to catalyse resin cure. In this way it is possible to produce blocks rapidly and consistently with a relatively low cure time so that little production space is needed to store curing blocks.

Preferably the two component streams are pumped to a mixing head where they are intimately mixed, and thence the mixture is either cast into moulds or extruded and subsequently cut up into blocks.

The invention will now be described in more detail by reference to Examples.

## Examples 1 and 2

In each case to components A and B were prepared, A being basic and B acidic. Where solids were present (in component A in Example 1 and both components in Example 2) they were premixed with sufficient liquid to facilitate pumping. The two components were stored separately and came together only during pumping of the mixture into the block moulds when the two components were pumped to two separate inlets of a mixing head and mixed inside the head, wherefromreacting mixture was fed into the moulds, which were open-topped cardboard boxes.

In Example 2 part of the acid was pre-neutralized with calcined magnesite, which was added to the acid with molasses to act as a heat sink.

This increased the setting time of the blocks from 5 minutes in Example 1 to 15 minutes in Example 2.

The formulations of the components used and analysis of the blocks produced are given below in Table I.

TABLE I

| Components (parts by weight) | Component A | Component B | Analysis | | | |
|---|---|---|---|---|---|---|
| | | | P | Ca | Mg | $N_2$ |
| Molasses | 45 | | | | | |
| Calcined magnesite | 6 | | | | | |
| Calcium sulphate | 6 | | | | | |
| Phosphoric acid | | 21 | | | | |
| Urea formaldehyde resin | 22 | | 4.2 | 1.4 | 3.6 | 4.4 |
| Molasses | 30 | 15 | | | | |
| Calcined magnesite | 4 | 2 | | | | |
| Calcium sulphate | 6 | | | | | |
| Phosphoric acid | | 21 | | | | |
| Urea formaldehyde resin | 22 | | 4.2 | 1.4 | 3.6 | 4.4 |

0086584

It should be noted that in both the above Examples, if the constituents were added individually in a single mix then it would be found not possible to devise a mixing sequence that would allow the production of a uniform pourable composition.

CLAIMS:

1. A process for the manufacture of feedstuff blocks using a urea-formaldehyde resin as binder characterised in that it comprises preparing two components to be mixed, one of which is acidic, and the other contains a urea-formaldehyde resin and a base to exotherm when reacted with the acid, either or both components being a slurry containing solid nutrients and both components being sufficiently liquid to be pumpable, pumping said components in two streams, intimately mixing the two streams and casting or extruding the resultant reacting mixture into the desired form.

2. A process according to claim 1 in which the resin component contains a base such as calcined magnesite.

3. A process according to claim 1 or 2 in which some base is added in to the acid component to neutralize some of the acid before the two components are mixed together.

4. A process according to claim 1, 2 or 3 in which the proportion of resin binder in the mixture produced is such as to provide feedstuff blocks with a resin content in the range 5 to 40% by weight.

5. A process according to any one of the preceding claims in which the acid catalyst in the acidic component is phosphoric acid.

6. A process according to any one of the preceding claims in which the two components are pumped to a mixing head where they are intimately mixed, and the reacting, exotherming mixture is fed from the mixing head into open moulds.

0086584

7. A process according to any one of claims 1 to 5 in which the two components are pumped to a mixing head where they are intimately mixed, and the reacting, exotherming mixture is extruded and cut into blocks.

8. A process according to any one of the preceding claims wherein the first component is an aqueous solution of an acid and the second component includes molasses, urea-formaldehyde resin, calcined magnesite and calcined sulphate.

9. A process according to any one of claims 1 to 8 wherein the first component includes molasses and is acidic, but a proportion of the acid therein has been neutralised by calcined magnesite and the second component also includes molasses, with urea-formaldehyde resin, calcined magnesite and calcium sulphate.

0086584

European Patent
Office

**EUROPEAN SEARCH REPORT**

Application number

EP  83 30 0448

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | GB-A-2 013 471  (PRODUITS CHIMIQUES UGINE) <br> * Abstract, claim 1 * | | A 23 K    1/20 <br> A 23 K    1/22 |
| A | FR-A-2 218 840  (BEECHAM GROUP LTD.) <br> * Claim 1 * | | |
| A | DE-A-2 939 337  (M. ESCH) <br><br> * Claims 1, 2, 5, 6 * | | |
| A | FR-A-2 351 607  (M. ADOLPHE) <br><br> * Page 2, example, claims 1, 2 * | | |

TECHNICAL FIELDS SEARCHED (Int. Cl. 3)

A 23 K    1/00

The present search report has been drawn up for all claims

| Place of search | Date of completion of the search | Examiner |
|---|---|---|
| BERLIN | 05-04-1983 | SCHULTZE D |